# EUROPÄISCHE PATENTSCHRIFT

(11) **EP 1 922 509 B1**
(45) Veröffentlichungstag und Bekanntmachung des Hinweises auf die Patenterteilung: **27.05.2009**
(21) Anmeldenummer: 06754493.2
(22) Anmeldetag: 22.06.2006
(51) Int. Cl.: F16L 47/22

(54) **VERFAHREN ZUM DICHTEN VERBINDEN VON ZWEI ENDABSCHNITTEN VON WELLROHREN UND VORRICHTUNG ZUM DURCHFÜHREN DES VERFAHRENS**
METHOD FOR TIGHTLY JOINING TWO END SECTIONS OF CORRUGATED PIPES AND DEVICE FOR CARRYING OUT THIS METHOD
PROCEDE DE RACCORDEMENT ETANCHE DE DEUX SEGMENTS TERMINAUX DE TUBES ONDULES ET DISPOSITIF PERMETTANT DE METTRE EN OEUVRE LEDIT PROCEDE

(30) Priorität: 26.08.2005 DE 102005040446
(43) Veröffentlichungstag der Anmeldung: 21.05.2008
(73) Patentinhaber: A. RAYMOND ET CIE, 38000 Grenoble (FR)
(72) Erfinder: SASEK, Václav, 46006 Liberec (CZ)
(74) Vertreter: Rüttgers, Joachim
(86) Internationale Anmeldenummer: PCT/EP2006/005997
(87) Internationale Veröffentlichungsnummer: WO 2007/022819

(56) Entgegenhaltungen:
- GB-A- 2 269 643
- US-A- 4 141 576
- US-A- 4 578 855

## Beschreibung

Die Erfindung betrifft ein Verfahren zum dichten Verbinden von zwei Endabschnitten von Wellrohren gemäß dem Oberbegriff des Patentanspruches 1.

Ein derartiges Verfahren ist aus US-A-4,141,576 bekannt. Das vorbekannte Verfahren zum dichten Verbinden von zwei Endabschnitten von Wellrohren weist die Schritte des Einfügens der Endabschnitte der Wellrohre in eine Schrumpfschlauchanordnung, die einen auf der Innenseite mit einer Klebstoffschicht belegten Schrumpfschlauch aufweist, des Beaufschlagens der Schrumpfschlauchanordnung im Bereich der Endabschnitte der Wellrohre mit Wärme auf eine Temperatur, so dass die Schrumpfschlauchanordnung an der Außenwand der Endabschnitte der Wellrohre anliegt, und des belastungsfreien Erkaltens der Schrumpfschlauchanordnung sowie der Endabschnitte der Wellrohre bis auf eine Temperatur, in der die Verbindung mechanisch belastbar ist.

Aus GB 2 269 643 A ist ein Verfahren zum dichten Verbinden von zwei Endabschnitten von glattwandigen Rohren mit einer Schrumpfschlauchanordnung bekannt, das im übrigen entsprechend dem gattungsgemäßen Verfahren durchgeführt wird.

Aus US-A-5,335,945 ist ein Verfahren zum dichten Verbinden von zwei Endabschnitten von Wellrohren sowie eine zugehörige Vorrichtung bekannt. Gemäß diesem vorbekannten Dokument werden zwei Endabschnitte von Wellrohren durch ein Verbindungsstück aus einem flexiblen dehnbaren Kunststoffmaterial miteinander verbunden, in das die Endabschnitte unter einem gewissen Aufdehnen der entsprechenden Abschnitte des Verbindungsstückes eingeschoben werden. Zum Erzielen einer verhältnismäßig hohen Druckdichtigkeit werden Schellen um einen Teil des Kontaktbereiches zwischen einem Endabschnitt und dem Verbindungsstück gelegt und festgezogen.

Der Erfindung liegt die Aufgabe zugrunde, ein Verfahren der eingangs genannten Art anzugeben, mit dem sich die Verbindung sehr einfach und mit einem guten Dichtigkeitsergebnis durchführen lässt.

Diese Aufgabe wird bei einem Verfahren der eingangs genannten Art erfindungsgemäß mit den kennzeichnenden Merkmalen des Patentanspruches 1 gelöst.

Dadurch, dass bei dem erfindungsgemäßen Verfahren ein Schmelzkleber verwendet wird, lassen sich die Wellrohre sehr einfach in die Schrumpfschlauchanordnung einführen, da zu diesem Zeitpunkt der Schmelzkleber noch nicht durch Wärmebeaufschlagung aktiviert ist. Weiterhin ergibt sich durch den sprungartigen Übergang des Schmelzklebers von der festen Phase in die flüssige Phase bei Überschreiten der Aktivierungstemperatur eine gute Abdichtung, da sich der dann flüssige Schmelzkleber gleichmäßig verteilt und somit zu einer sehr gleichmäßigen Beschichtung und Klebefläche führt.

Weitere zweckmäßige Ausgestaltungen der Erfindung sind Gegenstand der Unteransprüche.

Aus der nachfolgenden Beschreibung eines bevorzugten Ausführungsbeispiels der Erfindung, unter Bezug auf die Figuren der Zeichnung, ergeben sich weitere zweckmäßige Ausgestaltungen und Vorteile. Es zeigen:
- Fig. 1: zeigt in einer perspektivischen teilgeschnittenen Ansicht zwei Endabschnitte von Wellrohren, die in eine seinen ursprünglichen Durchmesser aufweisende Schrumpfschlauchanordnung eingefügt sind,
- Fig. 2: die Ausführung gemäß Fig. 1 mit einer schematischen Darstellung des Bereiches, in dem eine Wärmebeaufschlagung erfolgt, und
- Fig. 3: die Anordnung gemäß Fig. 1 mit einer nach Durchführen der Wärmebeaufschlagung hergestellten Verbindung.

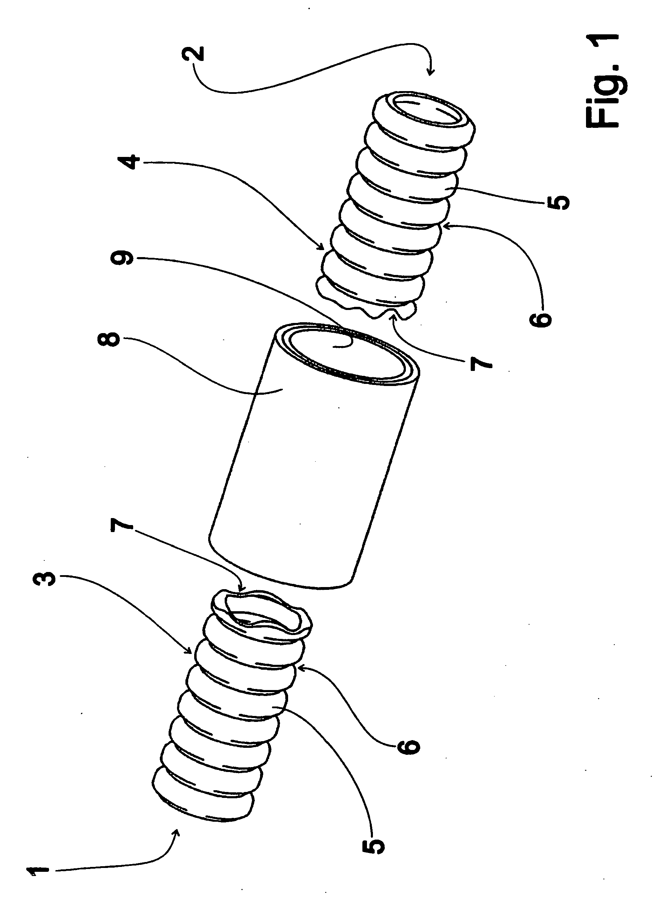

Fig. 1 zeigt in einer perspektivischen teilgeschnittenen Ansicht ein erstes Wellrohr 1 und ein zweites Wellrohr 2, deren jeweilige Endabschnitte 3, 4 eine Anzahl von Erhebungen und Vertiefungen 5, 6 aufweisen und einander gegenüberliegend angeordnet sind. Die Wellrohre 1, 2 wurden aus einem quasi endlosen Vorrat, sogenannter Meterware, abgetrennt, wobei, wie häufig vorkommend, die Wellrohre 1, 2 an ihren in der Darstellung gemäß Fig. 1 einander gegenüberliegenden Stirnseiten durch unsaubere Trennvorgang aufgetretene ausgebrochene Fehlbereiche 7 aufweisen.

Die Endabschnitte 3, 4 der Wellrohre 1, 2 sind in der Darstellung gemäß Fig. 1 in einen Schrumpfschlauch 8 einer Schrumpfschlauchanordnung einfügbar, der bei dem dargestellten Ausführungsbeispiel auf seiner den Endabschnitten 3, 4 der Wellrohre 1, 2 zugewandten Innenseite mit einer Klebstoffschicht 9 aus einem wärmeaktivierbaren Klebstoffmaterial als weiterem Bestandteil der Schrumpfschlauchanordnung belegt ist. Der Schrumpfschlauch 8 ist aus einem Kunststoffmaterial hergestellt, das bei Beaufschlagen mit Wärme zu einer Verringerung des Durchmessers, also einem Schrumpfen, des Schrumpfschlauches 8 um wenigstens etwa ein Drittel, vorzugsweise um etwa zwei Drittel seines ursprünglichen Durchmessers führt. Vor dem Beaufschlagen der Wärme weist der Schrumpfschlauch 8, wie in Fig. 1 deutlich erkennbar ist, einen Durchmesser auf, der so groß ist, dass die Endabschnitte 3, 4 der Wellrohre 1, 2 ohne Formänderung an dem Schrumpfschlauch 8, beziehungsweise der Klebstoffschicht 9, in den Schrumpfschlauch 8 einführbar sind.

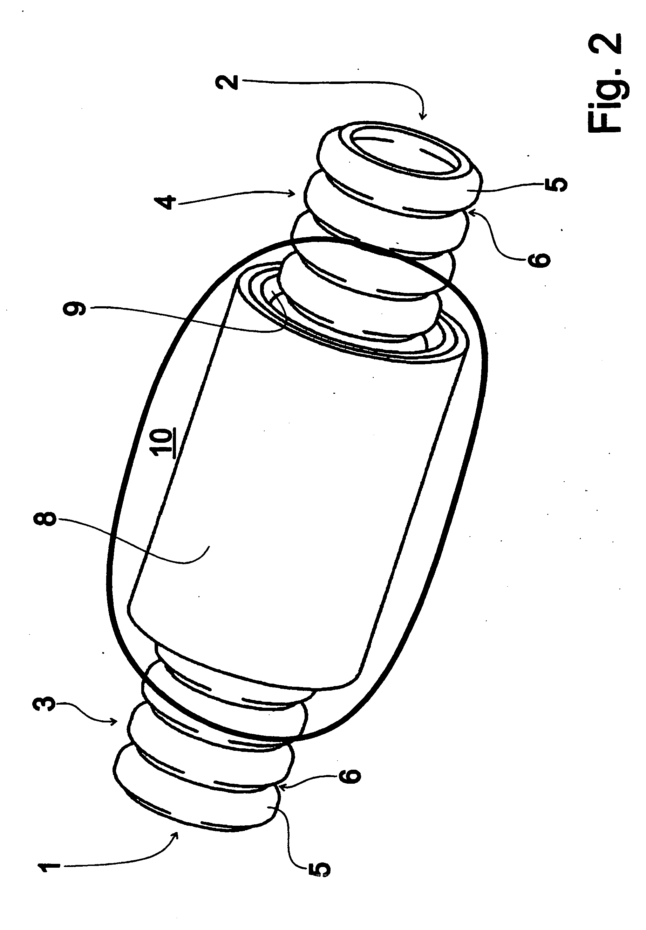

Fig. 2 zeigt die Anordnung gemäß Fig. 1 mit einem schematisch von einer durchgezogenen Linie umrandeten Bereich 10, in dem insbesondere durch Zufuhr von warmer Luft oder warmen Wasser der Schrumpfschlauch 8 im Bereich der Endabschnitte 3, 4 mit Wärme beaufschlagt wird. Dabei ist die Temperatur so eingerichtet, dass sich während der Wärmebeaufschlagung der Schrumpfschlauch 8 bestimmungsgemäß in radialer Richtung unter Ausüben einer radial auf die Endabschnitte 3, 4 einwirkenden Kraft zusammenzieht und die wärmeaktivierbare Klebstoffschicht 9 ihrer Klebewirkung entfaltet.

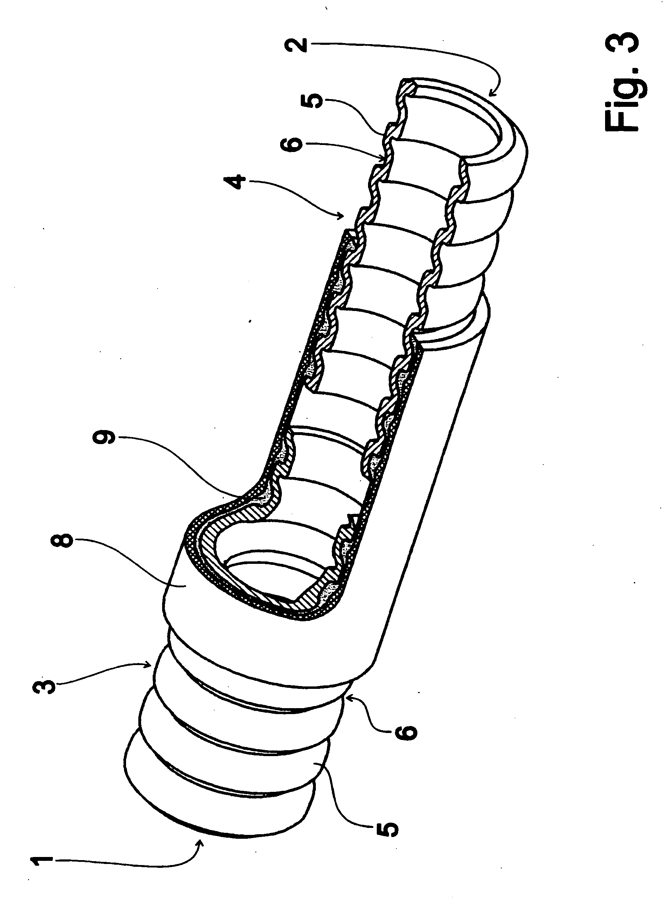

Fig. 3 zeigt die Anordnung gemäß Fig. 1 nach Durchführen der anhand Fig. 2 erläuterten Wärmebeaufschlagung im mechanisch belastbaren Zustand nach Erkalten auf eine entsprechende Temperatur. Aus Fig. 3 ist ersichtlich, dass bei diesem Ausführungsbeispiel nunmehr der Schrumpfschlauch 8 zusammen mit der Klebstoffschicht 9 an den Endabschnitten 3, 4 der Wellrohre 1, 2 eine labyrinthartige Dichtung ausbildet, bei der Material des Schrumpfschlauches 8 und hier insbesondere auch der Klebstoffschicht 9 an die Außenkontur über wenigstens drei Erhebungen 5 und drei Vertiefungen 6 jedes Endabschnittes 3, 4 der Wellrohre 1, 2 angepasst wird und somit an deren gewellten Außenwand anliegt.

Dabei ist sichergestellt, dass bei einem ungünstigen Fließverhalten der Klebstoffschicht 9, beispielsweise durch fertigungstechnisch nicht auszuschließenden Auftrag mit nicht immer gleichbleibender Dicke, oder bei Fehlstellen wie in Fig. 3 nicht mehr dargestellten Fehlbereichen 7 durch direktes Anliegen des Schrumpfschlauches 8 an Wandbereichen der Wellrohre 1, 2 über einen in Längsrichtung größeren Abschnitt eine gute Dichtwirkung erzielt wird. Insbesondere ist festzustellen, dass auch das Vorhandensein von Fehlbereichen 7 für die Qualität der Dichtung irrelevant ist. Weiterhin ist festzustellen, dass das Biegeverhalten von flexiblen Wellrohren 1, 2 nicht wesentlich beeinträchtigt wird, da sowohl der Schrumpfschlauch 8 als auch die Klebstoffschicht 9 eine gewisse Flexibilität aufweisen.

## Patentansprüche

1. Verfahren zum dichten Verbinden von zwei Endabschnitten (3, 4) von Wellrohren (1, 2) mit den Schritten des Einfügens der Endabschnitte (3, 4) der Wellrohre (1, 2) in eine Schrumpfschlauchanordnung (8, 9), die einen auf der Innenseite mit einer Klebstoffschicht (9) belegten Schrumpfschlauch (8) aufweist, des Beaufschlagens der Schrumpfschlauchanordnung (8, 9) im Bereich der Endabschnitte (3, 4) der Wellrohre (1, 2) mit Wärme auf eine Temperatur, so dass die Schrumpfschlauchanordnung (8, 9) an der Außenwand der Endabschnitte (3, 4) der Wellrohre (1, 2) anliegt, und des belastungsfreien Erkaltens der Schrumpfschlauchanordnung (8, 9) sowie der Endabschnitte (3, 4) der Wellrohre (1, 2) bis auf eine Temperatur, in der die Verbindung mechanisch belastbar ist, **dadurch gekennzeichnet**, die Klebstoffschicht (9) einen durch Beaufschlagen mit Wärme aktivierbaren Klebstoff aufweist und dass die Temperatur so eingerichtet ist, dass während der Wärmebeaufschlagung die wärmeaktivierbare Klebstoffschicht (9) ihrer Klebewirkung entfaltet.

2. Verfahren nach Anspruch 1, **dadurch gekennzeichnet, dass** die Schrumpfschlauchanordnung (8,9) wenigstens drei Erhebungen (5) und Vertiefungen (6) jedes Endabschnittes (3, 4) der Wellrohre (1, 2) überdeckt.

3. Verfahren nach Anspruch 1 mit Anspruch 2, **dadurch gekennzeichnet, dass** das Beaufschlagen mit Wärme durch warme Luft durchgeführt wird.

4. Verfahren nach Anspruch 1 oder Anspruch 2, **dadurch gekennzeichnet, dass** das Beaufschlagen mit Wärme durch warmes Wasser durchgeführt wird.

## Claims

1. Method for tightly joining two end sections (3, 4) of corrugated pipes (1, 2), comprising the steps of insertion of the end sections (3, 4) of the corrugated pipes (1, 2) into a shrink tube arrangement (8,9) which has a shrink tube (8) covered on the inside with an adhesive layer (9), of heating of the shrink tube arrangement (8, 9) in the region of the end sections (3, 4) of the corrugated pipes (1, 2) to a temperature such that the shrink tube arrangement (8, 9) rests against the outer wall of the end sections (3, 4) of the corrugated pipes (1, 2), and of load-free cooling of the shrink tube arrangement (8, 9) and of the end sections (3, 4) of the corrugated pipes (1, 2) to a temperature at which the bond is mechanically loadable, **characterized in that** the adhesive layer (9) comprises an adhesive which can be activated by exposure to heat and **in that** the temperature is set so that the heat-activatable adhesive layer (9) displays its adhesive effect during the exposure to heat.

2. Method according to Claim 1, **characterized in that** the shrink tube arrangement (8, 9) covers at least three protuberances (5) and indentations (6) of each end section (3, 4) of the corrugated pipes (1, 2).

3. Method according to Claim 1 with Claim 2, **characterized in that** the exposure to heat is carried out by warm air.

4. Method according to Claim 1 or Claim 2, **characterized in that** the exposure to heat is carried out by warm water.

## Revendications

1. Procédé pour raccorder ensemble de manière étanche deux portions d'extrémité (3, 4) de tuyaux ondulés (1, 2), comprenant les étapes consistant à emmancher les portions d'extrémité (3, 4) des tuyaux ondulés (1, 2) dans un dispositif de flexible de frettage à chaud (8, 9), qui comprend un flexible de frettage à chaud (8) dont la jupe intérieure est enduite d'une couche de substance adhésive (9), à soumettre le dispositif de flexible de frettage à chaud (8, 9), dans la zone correspondant aux portions d'extrémité (3, 4) des tuyaux ondulés (1, 2), à l'action d'une source de chaleur de manière à les porter à une température telle que le dispositif de flexible de frettage à chaud (8, 9) vienne en contact d'application sur la paroi extérieure des portions d'extrémité (3, 4) des tuyaux ondulés (1, 2) et à laisser le dispositif de flexible de frettage à chaud (8, 9), ainsi que les portions d'extrémité (3, 4) des tuyaux ondulés (1, 2) se refroidir en l'absence de toute sollicitation jusqu'à une température à laquelle l'assemblage peut être soumis à des sollicitations mécaniques, **caractérisé en ce que** la couche de substance adhésive (9) est faite d'une substance adhésive activable au moyen d'un apport de chaleur et **en ce que** la température est réglée à une valeur telle que la couche de substance adhésive activable par apport de chaleur (9) développe son action adhésive durant le processus de chauffe.

2. Procédé selon la revendication 1, **caractérisé en ce que** le dispositif de flexible de frettage à chaud (8, 9) recouvre au minimum trois protubérances (5) et portions en creux (6) de chaque portion d'extrémité (3, 4) des tuyaux ondulés (1, 2).

3. Procédé selon la revendication 1 conjointement à la revendication 2, **caractérisé en ce que** l'apport de chaleur s'effectue par application d'un flux d'air chaud.

4. Procédé selon la revendication 1 ou la revendication 2, **caractérisé en ce que** l'apport de chaleur est réalisé au moyen d'eau chaude.
